# EUROPEAN PATENT APPLICATION

(11) **EP 4 195 130 A1**
(43) Date of publication of application: **14.06.2023**
(21) Application number: 21213521.4
(22) Date of filing: 09.12.2021
(51) Int. Cl.: G06Q 20/22, G06Q 20/10, G06Q 20/42, G06Q 20/40

(54) **DATA PROCESSING APPARATUSES AND METHODS**

(71) Applicant: Vocalink International Limited, London EC4R 3AB (GB)
(72) Inventor: KUMAR, Kuldeep, Dunstable, LU5 4PU (GB); ROBERTS, Hannah, London, SW2 5SP (GB); CHANDRASEKHAR, Arundhati, Stamford, 06902 (US)
(74) Representative: Gill Jennings & Every LLP

(57) **Abstract**

A computer-implemented method of selecting one of a plurality of parties storing electronic value from which to transfer an electronic value amount to a recipient, the method comprising: receiving an electronic message indicating the electronic value amount and the recipient of the electronic value amount; determining a category associated with the recipient of the electronic value amount; selecting, based on the determined category, the one of the plurality of parties storing electronic value from which to transfer the electronic value amount to the recipient, the selected one of the plurality of parties storing electronic value being associated with the determined category; and outputting an electronic message to a computing device associated with the selected one of the plurality of parties storing electronic value instructing the computing device to transmit a request message to a user device operable by an owner of the electronic value stored by the selected one of the plurality of parties, the request message indicating the electronic value amount and the recipient of the electronic value amount, and, in response to receiving a confirmation message from the user device, initiate the transfer of the electronic value amount to the recipient.

## Description

### BACKGROUND

### Field of the Disclosure

The present disclosure relates to data processing apparatuses and methods.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

It is sometimes desirable for a user to transfer an electronic value amount to a recipient. The user may control electronic value stored by multiple different parties. Thus, when making the transfer of the electronic value amount, the user first selects the party from which the electronic value amount is to be transferred. The user does this using, for example, a user interface of a personal computer or smartphone. This improves flexibility for the user.

However, if the user regularly makes particular electronic value amount transfers from a specific one of the parties, the additional step of selecting this specific party every time one of these particular electronic value transfers is to be made can be cumbersome and negatively affect the user experience. For example, it makes the user's interaction with the user interface of the personal computer or smartphone less efficient. The resulting messaging associated with the selection process also undesirably increases network overheads.

There is therefore a desire to address this.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 shows an example system in which the present technique may be implemented;
Fig. 2 shows a first example implementation of the system of Fig.1;
Figs. 3A-E show a first example sequence of steps involving an interactive user interface;
Fig. 4 shows a first example message structure;
Fig. 5 shows a first example implementation of the system of Fig.1;
Figs. 6A-D show a second example sequence of steps involving an interactive user interface;
Fig. 7 shows a second example message structure;
Fig. 8 shows a first example lookup table;
Fig. 9 shows a second example lookup table;
Fig. 10 shows a first interactive screen of a user device;
Fig. 11 shows a second interactive screen of a user device;
Fig. 12 shows a third interactive screen of a user device;
Fig. 13 shows a first example method; and
Fig. 14 shows a second example method.

Like reference numerals designate identical or corresponding parts throughout the drawings.

### DETAILED DESCRIPTION OF THE EMBODIMENTS

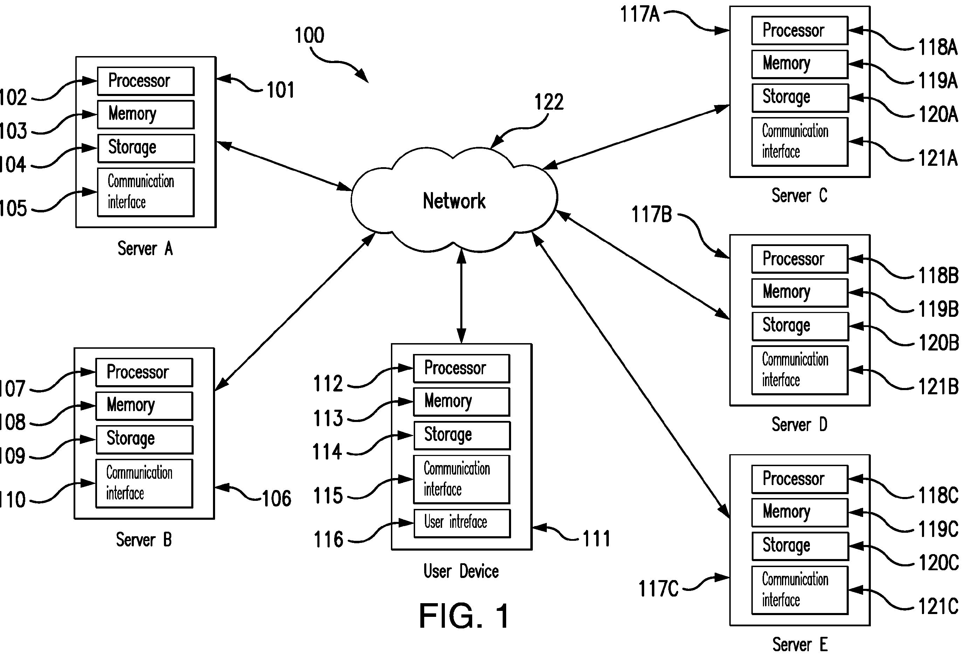

Fig. 1 shows an example system 100 in which the present technique is implemented. The system comprises a number of data processing apparatuses connected via a network 122 (e.g. the internet). The data processing apparatuses comprise a server A 101, server B 106, server C 117A, server D 117B, server E 117C and user device 111.

Server A 101 comprises a processor 102 for executing electronic instructions, a memory 103 for storing the electronic instructions to be executed and electronic input and output information associated with the electronic instructions, a storage medium 104 (e.g. a hard disk drive or solid state drive) for long term storage of information and a communication interface 105 for sending electronic information to and/or receiving electronic information from one or more of the other data processing apparatuses. Each of the processor 102, memory 103, storage medium 104 and communication interface 105 are implemented using appropriate circuitry, for example. The processor 102 controls the operation of each of the memory 103, storage medium 104 and communication interface 105.

Server B 106 comprises a processor 107 for executing electronic instructions, a memory 108 for storing the electronic instructions to be executed and electronic input and output information associated with the electronic instructions, a storage medium 109 (e.g. a hard disk drive or solid state drive) for long term storage of information and a communication interface 110 for sending electronic information to and/or receiving electronic information from one or more of the other data processing apparatuses. Each of the processor 107, memory 108, storage medium 109 and communication interface 110 are implemented using appropriate circuitry, for example. The processor 107 controls the operation of each of the memory 108, storage medium 109 and communication interface 110.

Server C 117A comprises a processor 118A for executing electronic instructions, a memory 119A for storing the electronic instructions to be executed and electronic input and output information associated with the electronic instructions, a storage medium 120A (e.g. a hard disk drive or solid state drive) for long term storage of information and a communication interface 121A for sending electronic information to and/or receiving electronic information from one or more of the other data processing apparatuses. Each of the processor 118A, memory 119A, storage medium 120A and communication interface 121A are implemented using appropriate circuitry, for example. The processor 118A controls the operation of each of the memory 119A, storage medium 120A and communication interface 121A.

Server D 117B comprises a processor 118B for executing electronic instructions, a memory 119B for storing the electronic instructions to be executed and electronic input and output information associated with the electronic instructions, a storage medium 120B (e.g. a hard disk drive or solid state drive) for long term storage of information and a communication interface 121B for sending electronic information to and/or receiving electronic information from one or more of the other data processing apparatuses. Each of the processor 118B, memory 119B, storage medium 120B and communication interface 121B are implemented using appropriate circuitry, for example. The processor 118B controls the operation of each of the memory 119B, storage medium 120B and communication interface 121B.

Server E 117C comprises a processor 118C for executing electronic instructions, a memory 119C for storing the electronic instructions to be executed and electronic input and output information associated with the electronic instructions, a storage medium 120C (e.g. a hard disk drive or solid state drive) for long term storage of information and a communication interface 121C for sending electronic information to and/or receiving electronic information from one or more of the other data processing apparatuses. Each of the processor 118C, memory 119C, storage medium 120C and communication interface 121C are implemented using appropriate circuitry, for example. The processor 118C controls the operation of each of the memory 119C, storage medium 120C and communication interface 121C.

User device 111 comprises a processor 112 for executing electronic instructions, a memory 113 for storing the electronic instructions to be executed and electronic input and output information associated with the electronic instructions, a storage medium 114 (e.g. a hard disk drive or solid state drive) for long term storage of information, a communication interface 115 for sending electronic information to and/or receiving electronic information from one or more of the other data processing apparatuses and a user interface 116 (e.g. a touch screen, a non-touch screen, buttons, a keyboard and/or a mouse) for receiving input from and/or outputting information to a user. Each of the processor 112, memory 113, storage medium 114, communication interface 115 and user interface 116 are implemented using appropriate circuitry, for example. The processor 112 controls the operation of each of the memory 113, storage medium 114, communication interface 115 and user interface 116. The user device 111 may be a smartphone, tablet computer (tablet) or personal computer, for example.

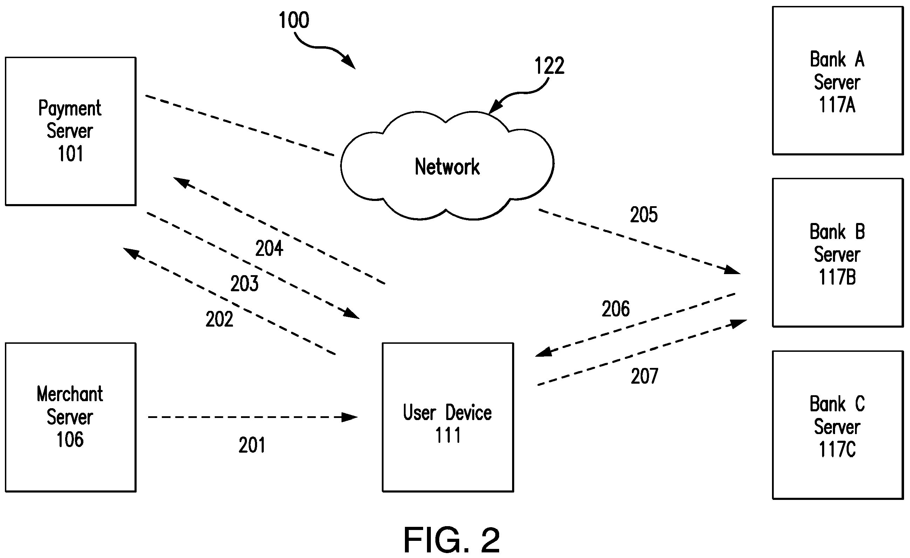

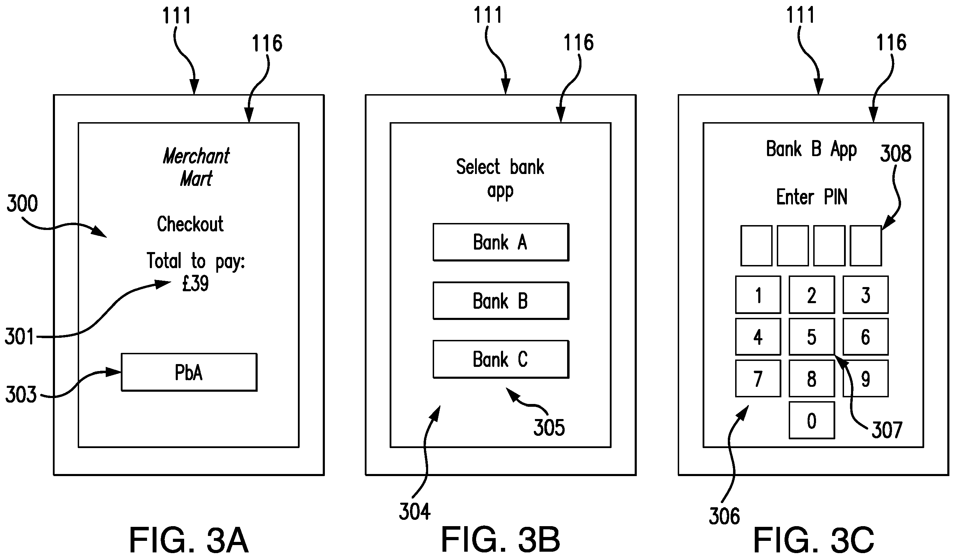

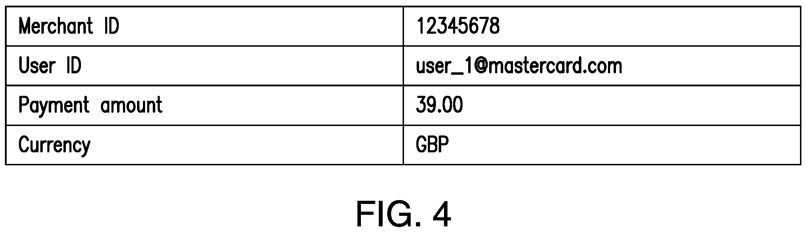

Fig. 2 shows an example application of the system 100. Here, server A 101 is a payment server 101 (controlled by a payment service provider), server B 106 is a merchant server (controlled by a merchant), server C is a server operated by a first financial institution (bank A), server D is a server operated by a second financial institution (bank B) and server E is a server operated by a third financial institution (bank C). Fig. 2, together with Figs. 3A-D and Fig. 4, give an example of how a user may pay for goods or services from a merchant when they are a customer of the merchant using the system 100.

Looking at Fig. 3A, the user, using user device 111, visits a website or networkconnected software application (e.g. a smartphone or tablet app) hosted by the merchant in order to buy goods or services. In this example, the user device 111 is a smartphone and the user interface 116 is a touch screen of the smartphone which displays the merchant website. Once the user has chosen the goods or services they wish to buy, they go to the checkout page 300. Here, information 301 indicating the total to pay (in this case, £39) is indicated and the user is presented with one or more options for payment. In this example, a single option is given, since this is the option implemented by the system 100 in this example. The option is Mastercard ^{®} Pay by Account (PbA) Alternatively, the option may be Mastercard ^{®} Bill Pay or Mastercard ^{®} Account-to-Account Peer-to-Peer (P2P) payments. It is noted that, in the given examples, where PbA is mentioned, the technical teachings described equally apply to Bill Pay or Account-to-Account P2P payments. Other payment options may also be presented to the user, such as payment by credit or debit card. The user selects the PbA payment option by selecting the PbA virtual button 303.

In response to the user selecting the PbA option for payment, the merchant server 106 (which, in this example, is hosting the merchant website and has thus already established a communication session with the user device 111) transmits a message to the user device 111 indicating the amount to be paid (39.00 in this example), the currency (GBP in this example) and a unique identifier of the merchant (which may be referred to as a "Merchant ID" and which is, for example, a numeric, alphabetic or alphanumeric combination unique to the merchant, a telephone number of the merchant or the registered company name of the merchant). This message is transmitted at step 201 in Fig. 2. In response, the user device 111 generates a new message including all the information in the message received at step 201 plus a unique identifier of the user (which may be referred to as a "User ID" and which is, for example, a numeric, alphabetic or alphanumeric combination unique to the user, a telephone number (e.g. mobile phone number) of the user, an email address of the user, a national ID, tax ID or e-wallet ID). This message is then transmitted to the payment server 101 at step 202.

An example of the message transmitted at step 202 is shown in Fig. 4. Here, the unique merchant identifier (Merchant ID, '12345678') is an 8-digit numerical combination unique to the merchant and the unique user identifier (User ID, 'user_1@mastercard.com') is an email address of the user. Both the user and merchant will have previously registered with the payment server 101. This allows details of (1) one or more banks with which the user owns accounts to be identified from the User ID and (2) a bank account owned by the merchant for receiving payment from customers to be identified from the Merchant ID.

In an alternative example, the user provides the User ID to the merchant server 106 and it is then the merchant server which transmits the message exemplified in Fig. 4 to the payment server 101. In this case, there is an additional step (not shown) of the User ID being transmitted from the user device 111 to the merchant server 106. The transmission at step 202 then occurs from the merchant server 106 to the payment server 101 (instead of from the user device 111 to the payment server 101).

In this example, the payment server 101 determines that the user identified by the User ID owns at least one bank account at each of a plurality of different banks. At step 203 in Fig. 2, the payment server 101 thus transmits a message to the user device 111 requesting a selection of one of the bank accounts from which payment to the merchant should be made. In response to this request at step 203, the user device 111 displays selection screen 304 comprising a number of virtual buttons 305 each of which is associated with a respective one of the plurality of banks. This is shown in Fig. 3B. In this example, the user has one account of each of banks A, B and C. An option for each of these banks is therefore provided to the user. Each bank is an example of a payment channel ("channel"), a payment channel being, for example, a financial institution with which a user has at least one account from which payments to a third party (e.g. a merchant) can be made.

The user selects which channel they wish to use for payment to the merchant by selecting the appropriate virtual button. In this example, the user wishes to use their account at bank B and therefore selects the virtual button labelled "Bank B". In response to the selection, at step 204, the user device 111 transmits a response to the payment server 101 indicating the selection of bank B.

This causes the payment server 101 to then transmit, at step 205, a request to the server 117B of bank B for payment from an account of the user at bank B to the merchant's account. The message uniquely identifies the user (e.g. by comprising the User ID itself or another unique identifier (e.g. numeric customer ID)) and includes the payment amount, currency, identifying information of the merchant (e.g. the merchant's trading name, which is stored and associated with the Merchant ID at the payment server 101) and details (e.g. sort code, account number and/or International Bank Account Number, IBAN) necessary to identify and make payments to the merchant's account.

In response to the request for payment, at step 206, the server 117B of bank B transmits a payment confirmation request to the user device 111. The payment confirmation request causes an online banking application (bank app) associated with bank B and previously installed on the user device 111 to open and display an authentication screen 306 to the user. An online banking application (bank app) is a network-enabled software application provided by a financial institution to allow a user (upon providing appropriate authentication information) to conduct banking activities online (e.g. checking account balances, transferring funds between bank accounts and transferring funds to other users). The bank app of a bank provides an interface between the user and a server of the bank (e.g. servers 117A-C) to enable such banking activities to be conducted.

The authentication screen 306 shown in Fig. 3C displays information allowing an authentication process to be completed. In this example, the authentication process requires the user to input a personal identification number (PIN) previously set up by the user with bank B. The authentication screen thus includes a PIN field 308 in which the PIN is entered (with the entered numbers appearing as asterisks or similar to prevent the PIN being seen by people in the user's vicinity) and numeric keypad 307 comprising virtual numeric keys to allow the user to enter their PIN. Only if the authentication process is successfully completed is access to the bank app allowed. This helps combat fraud. Other authentication processes may be used, for example, biometric (e.g. fingerprint, facial recognition or iris recognition) authentication.

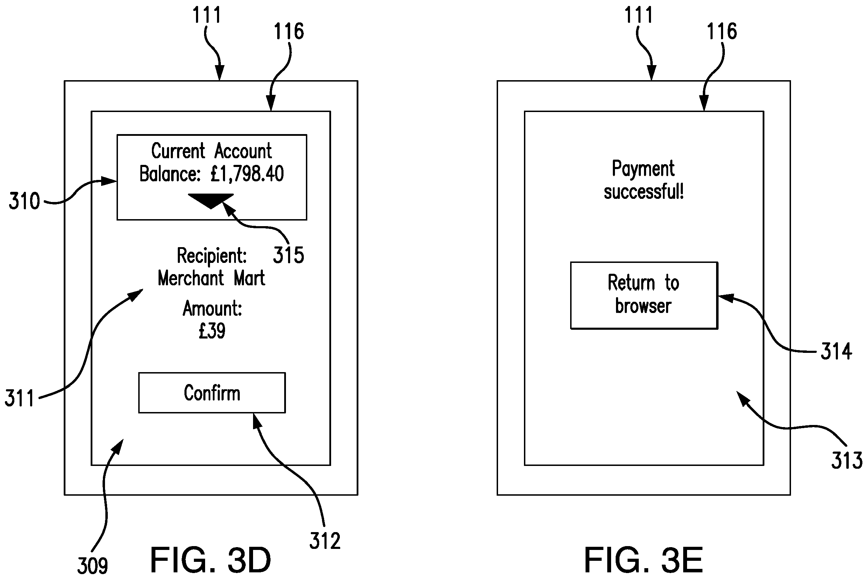

Upon successful authentication, an account selection screen 309 is displayed. This is shown in Fig. 3D.

The account selection screen 309 comprises an account indicator portion 310 which shows which one of the account(s) the user has at bank B is to be used for this particular payment. The name of the account (in this case, "current account") and the current balance of the account is displayed. The account indicator portion 310 also comprises a drop down selector 315 which, when selected by the user, causes a drop down menu (not shown) to be displayed. The drop down menu lists each account the user holds at bank B and allows the one of the account(s) the user wishes to use for this particular payment to be selected. Optionally, if the user only has a single account at bank B (as is the case in this example), the drop down selector 315 may be omitted.

The account selection screen 309 also shows payment information 311 about the payment (including, in this case, the payment amount, currency and identifying information of the merchant). The payment information is comprised in the payment confirmation request transmitted at step 206, for example.

Once the user has selected the account they wish to use and is happy for the payment to be made based on the displayed payment information 311, the user presses the "Confirm" virtual button 312. This causes the user device 111, at step 207, to transmit a confirmation message back to the server 117B of bank B. In response to receiving the confirmation message, the server 117B initiates payment from the user's account held at bank B to the merchant's account. The payment is implemented via any suitable account-to-account payment system such as Faster Payments.

Once the payment is complete, the bank app of bank B provides the user with a payment successful screen 313 indicating the payment was successful and providing a virtual button 310 to allow the user to return to the web browser used to access the merchant's website and receive an order confirmation from the merchant. The payment successful screen 313 is shown in Fig. 3E.

In an embodiment, messages transmitted between the user device 111 and payment server 101 (e.g. messages 202, 203 and 204) may be transmitted via the merchant server 106 and/or a third party service server (not shown), rather than directly between the user device 111 and payment server 101.

A problem with this system, however, is that if the user makes a large number of payments to different merchants, the need to go through the process of selecting which payment channel they wish to use by interacting with selection screen 304 every time they make a payment is cumbersome and negatively affects the user's experience in interacting with the user device 111 when making payments. This is becoming a bigger problem as it becomes common for users to have multiple payment channels each used for a different purpose. For example, a user may have an account at one bank for paying monthly bills (e.g. utilities and the like), an account at another bank for spending on day-to-day essentials (e.g. groceries and the like) and an account at yet another bank for entertainment (e.g. going to the theatre, holidays and the like). With the current system, even if, for instance, the user always uses the same payment channel to pay a particular monthly utility bill (e.g. if they always use their account at bank B), they will still have to select that channel by interacting with selection screen 304 every time they make the payment. There is therefore a desire to address this and improve the experience of the user when interacting with the user device 111 to make payments. The associated messaging (e.g. at steps 203 and 204) associated with manual payment channel selection also increases the use of network bandwidth. It is desirable to address these issues.

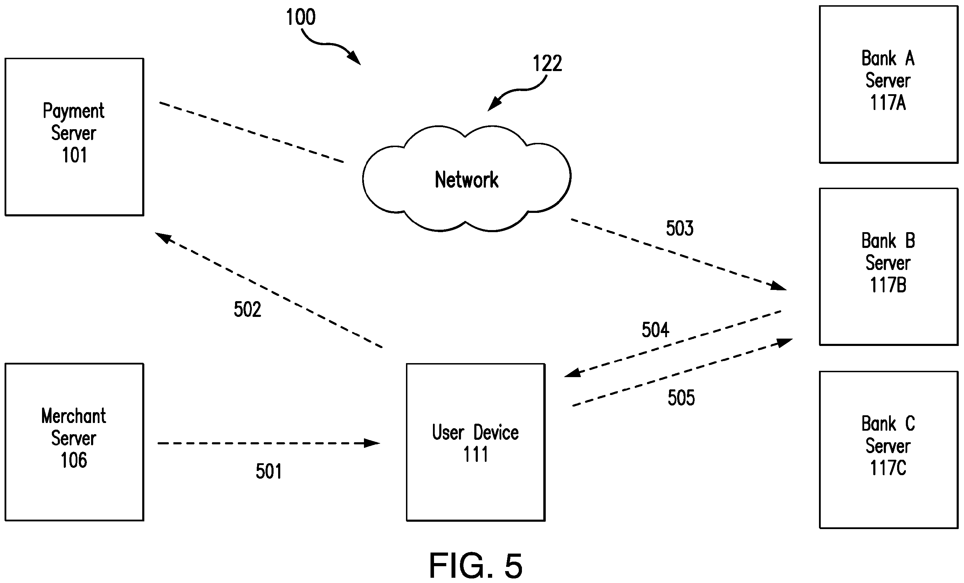

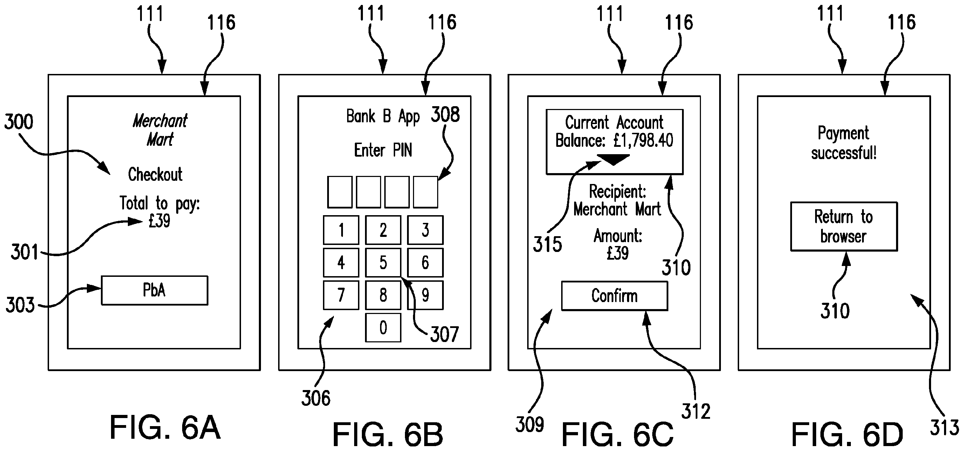

Figs. 5 and 6A-D show an example of the present technique which helps alleviate these technical challenges. Fig. 5 shows a message flow and Figs. 6A-D show a process of user interaction with the user device 111.

Fig. 6A shows the same checkout page 300 of Fig. 3A. Again, information 301 indicating the total to pay (in this case, £39) is indicated and the user selects the PbA payment option by selecting the PbA virtual button 303.

In response to the user selecting the PbA option for payment, at step 501, the merchant server 106 transmits a message to the user device 111 indicating the amount to be paid, the currency and the Merchant ID. This information was also included in the previously described message transmitted at step 201 in Fig. 2. However, the message of step 501 additionally indicates category information usable by the payment server 101 to determine the payment channel the user is likely to want to use to pay this particular merchant. Examples of category information are provided below and indicate, for instance, the type of goods and/or services being purchased. In response, the user device 111 generates a new message including all the information in the message received at step 501 plus the User ID. This message is then transmitted to the payment server 101 at step 502.

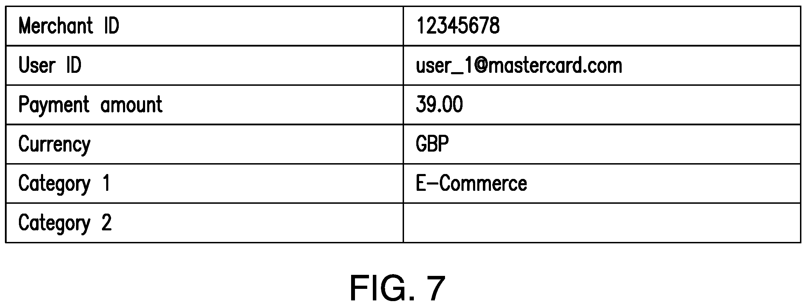

An example of the message transmitted at step 502 is shown in Fig. 7. Here, the category information included in the message of step 501 is included with the Merchant ID, User ID, payment amount and currency. The category information indicates the nature of the merchant the user is being asked to pay. In this example, since the merchant is an e-commerce merchant, the category of the merchant is "E-Commerce". The category is selected by the merchant from a plurality of predetermined options, for example. Each merchant may also select multiple categories, for example, a main category and sub-category. This allows better granularity of different types of merchant and thus more accurate selection of the correct one of the user's payment channels via which to make the payment. In this example, the merchant has the option to choose one main category ('Category 1') and one sub-category ('Category 2'). The merchant has not chosen a sub-category and therefore the 'Category 2' field of the message of step 502 is left blank. This may be, for example, because the merchant sells a very large range of different e-commerce products (rather than being limited to a particular type of product) and therefore considers it inappropriate to choose a sub-category of products sold. However, if a sub-category had been chosen by the merchant, it would be included in the 'Category 2' field.

In an alternative example, the user provides the User ID to the merchant server 106 and it is then the merchant server which transmits the message exemplified in Fig. 7 to the payment server 101. In this case, there is an additional step (not shown) of the User ID being transmitted from the user device 111 to the merchant server 106. The transmission at step 502 then occurs from the merchant server 106 to the payment server 101 (instead of from the user device 111 to the payment server 101).

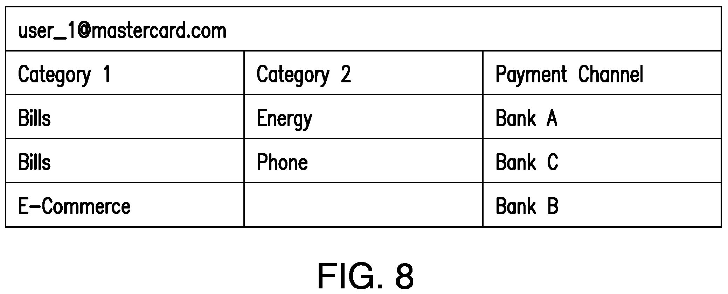

In response to receiving the message of step 502, the payment server looks up the User ID to determine the payment channels associated with the user (e.g. the bank(s) with which the user owns at least one account). However, in addition to being able to identify the payment channels associated with the user, the user has also selected which of these payment channels is to be used for each category of payment. This is exemplified in Fig. 8 which shows a lookup table associated with the User ID stored at the payment server 101.

It can be seen that, for the main category "Bills" and sub-category "Energy" (associated with merchants supplying energy to the user) the user has selected, as the payment channel, their bank account at bank A to be used for payment. For the main category "Bills" and sub-category "Phone" (associated with merchants supplying phone services to the user), the user has selected, as the payment channel, their bank account at bank C to be used for payment. For the main category "E-Commerce" (with no sub-categories being defined by the user), the user has selected, as the payment channel, their bank account at bank B to be used for payment.

Based on the category information included in the message of step 502 and the lookup table associated with the User ID, the payment server 101 is thus able to determine, without further input from the user, that an account owned by the user at bank B should be used to complete the payment. The payment server 101 thus transmits, at step 503, a request to the server 117B of bank B for payment from an account of the user at bank B to the merchant's account. Like the message of step 205, this message uniquely identifies the user (e.g. by comprising the User ID itself or another unique identifier (e.g. numeric customer ID)) and includes the payment amount, currency, identifying information of the merchant (e.g. the merchant's trading name, which is stored and associated with the Merchant ID at the payment server 101) and details (e.g. sort code, account number and/or International Bank Account Number, IBAN) necessary to identify and make payments to the merchant's account.

In response to the request for payment, at step 504, the server 117B of bank B transmits the payment confirmation request to the user device 111. The payment confirmation request causes the bank app associated with bank B to display the authentication screen 306 shown in Fig. 6B. This is the same as the authentication screen shown in Fig. 3C. Once the user has successfully completed the authentication process (in this example, correct PIN entry but, again an alternative authentication technique such as biometric technique could be used), access to the bank app is permitted and the account selection screen 309 is displayed. This is shown in Fig. 6C and is the same as the account selection screen shown in Fig. 3D. Once the user has selected the account they wish to use and is happy for the payment to be made based on the displayed payment information 311 (which is comprised in the payment confirmation request transmitted at step 504, for example), the user presses the "Confirm" virtual button 312. This causes the user device 111, at step 205, to transmit a confirmation message back to the server 117B of bank B. In response to receiving the confirmation message, the server 117B initiates payment from the user's account held at bank B to the merchant's account. The payment is again implemented via any suitable account-to-account payment system such as Faster Payments.

Once the payment is complete, the bank app of bank B provides the user with the payment successful screen 313 indicating the payment was successful and providing a virtual button 310 to allow the user to return to the web browser. This is shown in Fig. 6D and is the same as the payment successful screen shown in Fig. 3E.

In an embodiment, messages transmitted between the user device 111 and payment server 101 (e.g. message 502) may be transmitted via the merchant server 106 and/or a third party service server (not shown), rather than directly between the user device 111 and payment server 101.

Thus, due to the use of the category information associated with the merchant, the need for the user to manually interact with the user device 111 via selection screen 304 to select the payment channel they wish to use is alleviated. At the same time, the ability of the user to use different payment channels for different types of merchant is maintained. User payment channel flexibility is therefore maintained whilst allowing the user to be provided with a quicker and easier user interface when interacting with the user device 111 to authorise payments. Furthermore, due to the alleviation of the messaging requirements needed for manual selection (e.g. the messaging of steps 203 and 204 in Fig. 2), network overhead is reduced. At the same time, since no sensitive information (e.g. bank account information) needs to be transmitted to the merchant, security of the user's sensitive information is maintained.

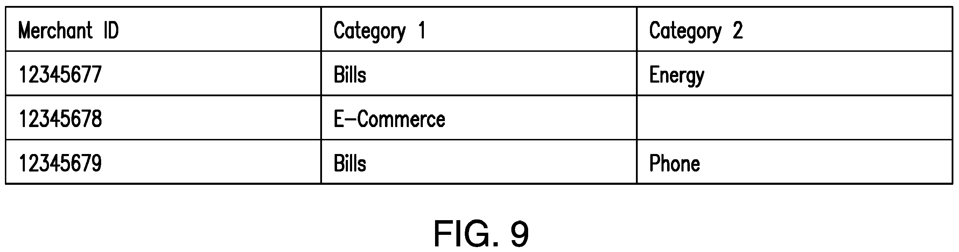

In a variation, instead of the message of step 502 including the category information (as exemplified in Fig. 7), category information associated with each merchant registered with the payment server 101 may be stored at the payment server in advance. For example, this information may be stored in a lookup table like that exemplified in Fig. 9. Here, the Merchant ID associated with each merchant registered with the payment server is associated with respective category information, in this case, main category ('Category 1') and sub-category ('Category 2') information. In this case, the message transmitted at step 502 may again take the form of the message of Fig. 4, for example. The payment server 101, upon receiving the message, then looks up the Merchant ID ('12345678' in this case) in the table of Fig. 9 and determines the category information (main category 'E-Commerce', no sub-category, in this case). The looked up category information associated with the merchant is then used to look up the payment channel associated with that category information for the user. In this example, the lookup table of Fig. 8 is used to determine the user's account at bank B as the payment channel to be used for payment (since this is the bank account associated with the main category 'E-Commerce'). Using this variation means the category information associated with the merchant does not have to be included in the message at step 502, thereby further reducing the use of network resources. On the other hand, using the other variation in which the category information is included with the messages at step 502 means the category information can be easily recorded by the user device 111 (thereby allowing quick and efficient analytics of the user's spending, for example) and ensures the category information is up-to-date (alleviating the consequences of category information stored at the payment server 101 not being updated sufficiently regularly by the merchant). There are therefore technical benefits to both variations.

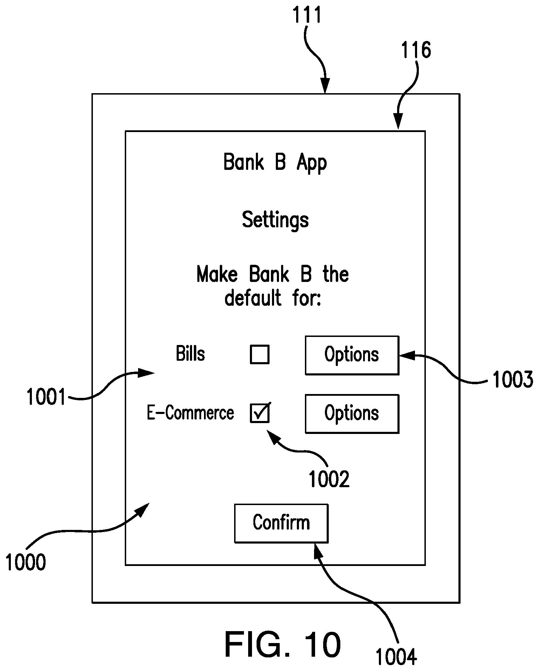

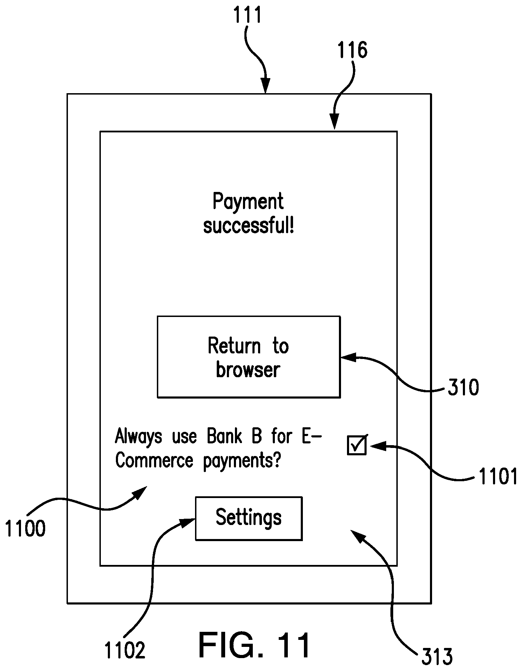

Figs. 10 and 11 show example ways in which the user may select which payment channel is to be used for which merchant category. In each case, the user interacts with the bank app of the relevant bank on the user device 111 to provide an association between that bank and one or more merchant categories (thereby confirming that bank as the relevant payment channel). This information is then transmitted to the server of the bank which, in turn, transmits the information to the payment server 101 to update the lookup table (see e.g. Fig. 8) associating the user's payment channel(s) and merchant category / categories.

Fig. 10 shows a first example. Here, the user manually enters a "Settings" section of the bank app of bank B (e.g. by selecting an appropriate virtual button on a home screen of the bank app (not shown) to enter a settings menu) and is presented with a category selection screen 1000 allowing the user to select one or more categories with which Bank B should be made the default payment channel. The category selection screen 1000 may also be displayed as part of the procedure of the user initially registering Bank B as a payment channel with the payment server 101 (e.g. during a PbA registration process). This initial registration associates the User ID (e.g. email address) with Bank B at the payment server 101 and thus allows Bank B to be selected as a payment channel for future payments.

A payment channel is a default payment channel (also known as a "preferred payment channel") for a particular category when it is associated with that particular category at the payment server 101 in the way previously described. For example, using the example lookup table of Fig. 8, Bank A is the default payment channel for payments with main category "Bills" and sub-category "Energy", Bank C is the default payment channel for payments with main category "Bills" and sub-category "Phone" and Bank B is the default payment channel for payments with main category "E-Commerce" (and no sub-category).

The category selection screen 1000 comprises a list 1001 of the different selectable categories. A selectable checkbox 1002 is positioned next to each category. For simplicity, only two categories ("Bills" and "E-Commerce") are displayed here. However, in reality, there may be a larger number of categories to choose from. Here, the user has selected the checkbox for the category "E-Commerce", indicating they wish bank B to be set as the default payment channel for "E-Commerce" payments. Here, each displayed category is a main category. Next to each main category is an "Options" virtual button 1003. Selecting this virtual button takes the user to a sub-category screen (not shown) for that main category in which the sub-categories associated with that main category (e.g. sub-categories "Energy" and "Phone" for the main category "Bills") are selectable in the same way (e.g. with selectable checkboxes). This allows the user to easily select different default payment channels for different sub-categories of the same main category (as exemplified in Fig. 8, in which the user selects bank A for the sub-category "Energy" of the main category "Bills" and bank C for the sub-category "Phone" of the main category "Bills"). Once the user has made their desired category selections, they select the "Confirm" virtual button 1004. In response to this, the user device 111 transmits a message to the payment server 101 indicating the user's selections. The payment server 101 then updates the default payment channels associated with the user in response to this message. In this example, the user's selection of associating bank B with "E-Commerce" payments is indicated to the payment server, thereby allowing the payment server to record this in the lookup table exemplified in Fig. 8.

The example of Fig. 10 thus demonstrates how the user is provided with an easy-to-use user interface to allow them a high level of flexibility and control in determining, in advance, which payment channels(s) are associated with which category / categories. Furthermore, the fact that the user interface is provided via the user's bank app (with which the user already has a high degree of trust) helps ensure the security of the user's selected category data.

Fig. 11 shows a second example. The second example may be used in addition to the first example. Here, after the user has successfully made a payment using their account at bank B to the "E-Commerce" merchant controlling merchant server 106, the payment successful screen 313 is displayed. In this example, the payment successful screen 313 additionally includes a message 1100 asking whether the user wishes to always use bank B for "E-Commerce" category payments (that is, whether bank B should be made the default payment channel for "E-Commerce" payments). The user is able to agree or disagree by selecting or deselecting the checkbox 1101 provided next to the message. The selection is then confirmed when the user selects the "Return to browser" virtual button 310. If the user has selected the checkbox 1101, a message indicating the selection is sent from the user device 111 to the bank B server 117B which, in turn, transmits a message to the payment server 101 indicating that the bank B should be set as the default payment channel for "E-Commerce" payments. This allows, for example, the payment server 101 to update the lookup table exemplified in Fig. 8 to set bank B as the default payment channel for "E-Commerce" payments. A "Settings" virtual button 1102 is also provided to allow the user to access the more comprehensive category selection screen 1000 exemplified in Fig. 10.

The payment selection screen 313 of Fig. 11 may be displayed to the user when either (1) no default payment channel has previously been selected for the payment category of a new payment (and therefore, for example, the user is presented with selection screen 304 to manually select a payment channel) or (2) a default payment channel has previously been selected for the payment category of a new payment (and therefore, for example, the user is not presented with selection screen 304 and, instead, the default payment channel (e.g. bank B for "E-Commerce") is selected automatically).

In situation (1), this allows a user to quickly and easily set the payment channel they manually select as the default payment channel for future payments of the category concerned. Next time they make such a payment, they will thus no longer have to interact with the selection screen 304 but will instead be directed straight to the authentication screen 306 of the relevant bank app, for example. Thus, the user is able to easily select a default payment channel when making a payment of a particular category for the first time so that, for future payments of that category, payment channel selection is not required. The user is thus able to obtain the benefits of improved user interaction for those future payments without the need to manually make category selections using the category selection screen 100 exemplified in Fig. 10. In this example, since no default payment channel is initially set for the payment category, the first payment of that payment category is implemented according to Fig. 2, for example. The message transmitted from the payment server 101 to the bank B server 117B at step 205 indicates the category information of the payment ("E-Commerce", in this example), thereby allowing the bank app of bank B to display the message 1100. Once a default payment channel for the payment category is set, however, subsequent payments are implemented according to Fig. 5, for example.

In situation (2), this allows the user to quickly and easily confirm that they still wish to use the currently selected default payment channel for the payment category concerned for future payments of that category. If the user deselects the checkbox 1101, a message indicating the deselection is sent from the user device 111 to the bank B server 117B which, in turn, transmits a message to the payment server 101 indicating that bank B should be removed as the default payment channel for "E-Commerce" payments. In response, the payment server thus removes the association of bank B with "E-Commerce" payments (e.g. by removing bank B from the lookup table exemplified in Fig. 8). This allows the user to quickly and easily stop a particular payment channel from being used as the default payment channel for payments of a particular category. This is useful if, for example, the user intends to close their account at bank B.

In one example, in addition to or instead of a payment channel being directly removable as the default payment channel for a particular category (e.g. by unchecking the checkbox 1101 in Fig. 11 so that bank B is removed as the default payment channel for "E-Commerce" in the lookup table of Fig. 8), a default payment channel for a particular category may be removed by replacing it with a different payment channel.

For example, if the user wishes to no longer use bank B as the default payment channel for "E-Commerce" and instead use bank C, they can do this by logging in to the bank app of bank C (via an authentication screen similar to authentication screen 306 of bank B's bank app, for example), navigating to a category selection screen (similar to the category selection screen 1000 of bank B's bank app, for example) and selecting "E-Commerce" as a category for which bank C should be the default payment channel.

Upon confirmation of the selection (e.g. by selecting the "Confirm" virtual button 1004), a message indicating the bank C should be made the default payment channel for "E-Commerce" payments is sent from the user device 111 to the bank C server 117C which, in turn, transmits a corresponding message indicating this to the payment server 101. In response, the payment server thus replaces bank B with bank C as the default payment channel for "E-Commerce" payments (e.g. by removing "Bank B" from the "E-Commerce" row of the lookup table exemplified in Fig. 8 and replacing it with "Bank C").

Multiple ways are therefore provided to allow a user to quickly and easily update the default payment channel associated with any given category.

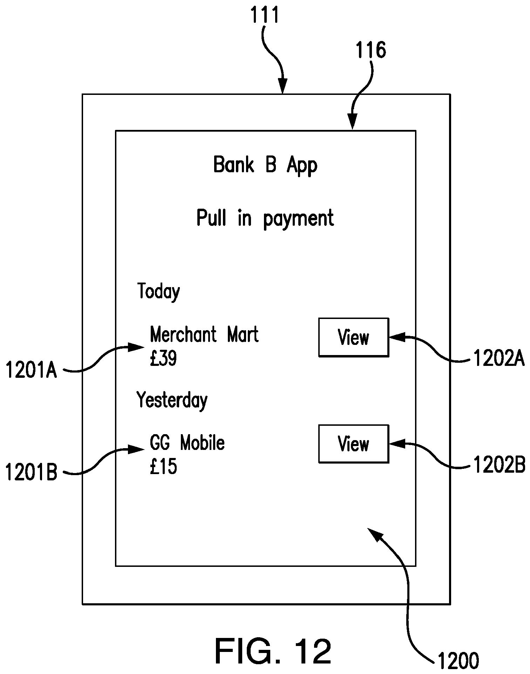

Fig. 12 shows another example according to the present technique for use when a user has not selected a particular payment channel for a certain category of payments. In this case, the user must manually select which payment channel to use. They can either do this by being provided with the selection screen 304 or, in the case of Fig. 12, by opening the bank app of the payment channel they wish to use for payment and navigating (via an appropriate virtual button on a home screen (not shown), for example) to a pull in payment screen 1200. The user may also do this if the payment concerned does have an associated default payment channel but the user nonetheless wishes to use a different payment channel to the default payment channel. In this case, when presented with the bank app authentication screen of the default channel (e.g. as exemplified in Fig. 6B), the user will exit the bank app (e.g. by pressing a "Home" virtual button (not shown) or the like) and open the bank app of the different payment channel they wish to use. They can then authenticate themselves to the different bank app and navigate to the pull in payment screen 1200 of the different bank app. The payment server 101 knows when the payment has been completed because it is notified of this by the bank server of the payment channel used to complete the payment.

In the example of Fig. 12, the pull in payment screen of the bank app of bank B is shown. Navigating to the pull in payment screen causes a request message to be sent to the bank B server 117B requesting information indicating pending payments for the user's User ID at the payment server 101. Pending payments are payments which have been instructed by the user device 111 (e.g. at step 502) but which have not yet been completed (e.g. due to the user not yet selecting the "Confirm" virtual button 312 of the account selection screen 309 of the appropriate bank app). The bank B server 117B, in turn, transmits a request message requesting information indicating pending payments for the user's User ID to the payment server 101. In response, the payment server 101 transmits a message to the bank B server 117B indicating each pending payment for the user. For each pending payment, the message comprises, for example, the payment amount, currency, identifying information of the merchant (e.g. the merchant's trading name, which is stored and associated with the Merchant ID at the payment server 101) and details (e.g. sort code, account number and/or International Bank Account Number, IBAN) necessary to identify and make payments to the merchant's account. In response to receiving this message from the payment server 101, the bank B server 117B then provides pending payment information to the user via the pull in payment screen 1200.

The example pull in payment screen 1200 of Fig. 12 shows the pending payments for the user at the payment server 101. Here, today's pending payment of £39 to the merchant with trading name "Merchant Mart" previously discussed is shown as information 1201A. There is also another pending payment of £15 from yesterday to a merchant with trading name "GG Mobile". This is another outstanding payment the user has not yet made and is shown as information 1201B. A "View" virtual button 1202A, 1202B is shown next to each piece of pending payment information 1201A, 1201B. Selection of the appropriate "View" virtual button brings the user to an account selection screen of the bank app to select an account and confirm the payment. For example, if the user selects "View" virtual button 1202A, they are taken to the account selection screen 309 to easily select the account at bank B they wish to use and complete the payment in the way previously discussed. Once the payment is completed, the bank B server 117B notifies the payment server 101 the payment has been completed and the payment server 101 removes the payment from the list of pending payments.

In the example of Fig. 12, the message sent from the payment server 101 to the bank B server 117B indicating each pending payment for the user contains the same information for each pending payment as the message sent at step 502, for example. Furthermore, a message sent from the bank B server 117B to the user device 111 to provide the pending payment information on the pull in payment screen 1200 contains the same information for each pending payment as the message sent at step 504, for example.

As demonstrated by Fig. 12, the user is thus provided with another simple way to view and authorise pending payments via their trusted bank app. Once a pending payment has been selected and payment completed, the user may also be presented with the payment successful screen 313 shown in Fig. 11, thereby allowing the user to select the payment channel used to make the payment as the default payment channel for future payments of the same category.

The present technique thus allows the user to authorise payments for different categories of goods and services from different payment channels in a secure, flexible and network efficient way. Furthermore, wherever possible, the interaction with the user device 111 to enable this is made quick and easy.

Although, in the above examples, the payment is made using PbA, the present technique is not so limited. For example, the payment server 101 may instead store credit or debit card payment details associated with the User ID and allow different payment card providers to be associated with different categories. In this case, each payment card provider acts as a payment channel and the system 100 is augmented with appropriate card payment infrastructure (not shown) to enable the transfer of funds from a credit or debit account held by the user to the merchant's account based on an indication of the payment provider selected by the payment server 101 and included in the message 503.

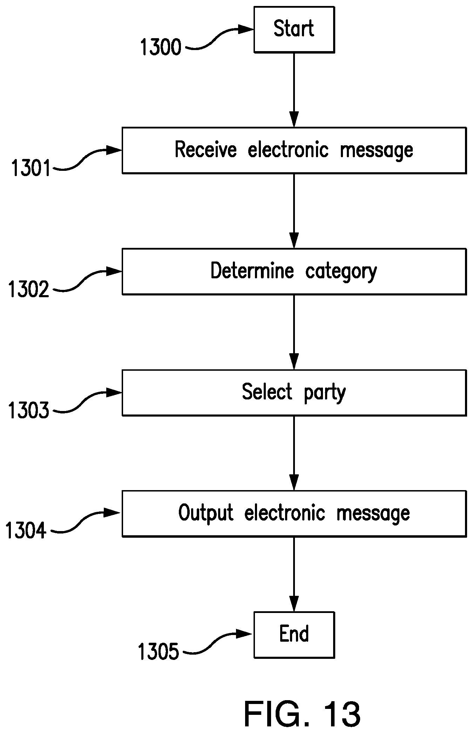

Fig. 13 shows an example method according to the present technique. The method is implemented by the processor 102 of payment server 101 and is a method of selecting one of a plurality of parties storing electronic value (e.g. bank A, bank B or bank C) from which to transfer an electronic value amount (e.g. a payment) to a recipient (e.g. a merchant).

The method starts at step 1300.

At step 1301, the processor 102 controls the communication interface 105 to receive an electronic message (e.g. the message of step 502) indicating the electronic value amount and the recipient of the electronic value amount.

At step 1302, the processor 102 determines a category associated with the recipient of the electronic value amount. This determination is based on, for example, category information included in the received message (see e.g. Fig. 7) or category information previously stored in the storage medium 104 (e.g. in the form of a lookup table like that of Fig. 9).

At step 1303, the processor 102 selects, based on the determined category, the one of the plurality of parties storing electronic value from which to transfer the electronic value amount to the recipient, the selected one of the plurality of parties storing electronic value (e.g. bank B) being associated with the determined category (e.g. "E-Commerce").

At step 1304, the processor 102 controls the communication interface 105 to output an electronic message (e.g. the message of step 503) to a computing device associated with the selected one of the plurality of parties storing electronic value (e.g. bank B server 117B) instructing the computing device to transmit a request message to a user device operable by an owner of the electronic value stored by the selected one of the plurality of parties (e.g. user device 111), the request message (e.g. the message of step 504) indicating the electronic value amount and the recipient of the electronic value amount, and, in response to receiving a successful confirmation message from the user device (e.g. the message of step 505), initiate the transfer of the electronic value amount to the recipient.

The method ends at step 1305.

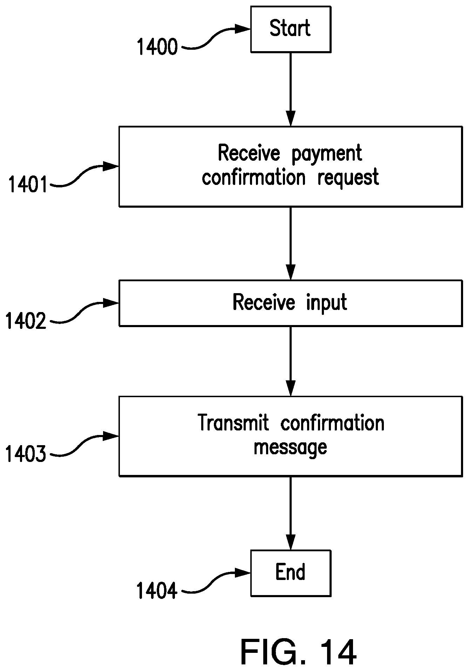

Fig. 14 shows another example method according to the present technique. The method is implemented by the processor 112 of user device 111 and is a method of authorising a transfer of an electronic value amount (e.g. a payment) to a recipient (e.g. a merchant) from a selected one of a plurality of parties storing electronic value (e.g. bank A, bank B or bank C), the selected one of the plurality of parties storing electronic value being associated with a category associated with the recipient of the electronic value amount (e.g. bank B being associated with "E-Commerce").

The method starts at step 1400.

At step 1401, the processor 112 controls the communication interface 115 to receive, from a computing device associated with the selected one of the plurality of parties storing electronic value (e.g. bank B server 117B), a request message (e.g. the message of step 504) indicating the electronic value amount and the recipient of the electronic value amount.

At step 1402, the processor 112 controls the user interface 116 to receive, via an interactive user interface (e.g. account selection screen 309) and from an owner of the electronic value stored by the selected one of the plurality of parties (e.g. the customer), an input (e.g. selection of "Confirm" virtual button 312) indicating confirmation of the transfer of the electronic value amount to the recipient.

At step 1403, in response to the user interface 116 receiving the input, the processor 112 controls the communication interface 115 to transmit, to the computing device associated with the selected one of the plurality of parties (e.g. bank B server 117B), a confirmation message (e.g. the message of step 505) to initiate the transfer of the electronic value amount to the recipient.

The method ends at step 1404.

Embodiment(s) of the present technique are defined by the following numbered clauses:
1. A computer-implemented method of selecting one of a plurality of parties storing electronic value from which to transfer an electronic value amount to a recipient, the method comprising:
   receiving an electronic message indicating the electronic value amount and the recipient of the electronic value amount;
   determining a category associated with the recipient of the electronic value amount;
   selecting, based on the determined category, the one of the plurality of parties storing electronic value from which to transfer the electronic value amount to the recipient, the selected one of the plurality of parties storing electronic value being associated with the determined category; and
   outputting an electronic message to a computing device associated with the selected one of the plurality of parties storing electronic value instructing the computing device to transmit a request message to a user device operable by an owner of the electronic value stored by the selected one of the plurality of parties, the request message indicating the electronic value amount and the recipient of the electronic value amount, and, in response to receiving a confirmation message from the user device, initiate the transfer of the electronic value amount to the recipient.
2. A computer-implemented method according to clause 1, wherein the received electronic message indicating the electronic value amount and the recipient of the electronic value amount indicates the category associated with the recipient of the electronic value amount.
3. A computer-implemented method according to clause 1, wherein the category associated with the recipient of the electronic value amount is stored in advance in association with a stored identifier of the recipient.
4. A computer-implemented method according to any preceding clause, wherein the recipient is a merchant, the owner of the electronic value stored by the selected one of the plurality of parties is a customer of the merchant and the electronic value stored by the selected one of the plurality of parties is stored in a financial account of the owner.
5. A computer-implemented method according to any preceding clause, wherein the user device is one of a personal computer, tablet computer or smartphone.
6. A computer-implemented method of authorising a transfer of an electronic value amount to a recipient from a selected one of a plurality parties storing electronic value, the selected one of the plurality of parties storing electronic value being associated with a category associated with the recipient of the electronic value amount, the method comprising:
   receiving, from a computing device associated with the selected one of the plurality of parties storing electronic value, a request message indicating the electronic value amount and the recipient of the electronic value amount;
   receiving, via an interactive user interface and from an owner of the electronic value stored by the selected one of the plurality of parties, an input indicating confirmation of the transfer of the electronic value amount to the recipient; and
   in response to receiving the input, transmitting, to the computing device associated with the selected one of the plurality of parties, a confirmation message to initiate the transfer of the electronic value amount to the recipient.
7. A computer-implemented method according to clause 6, wherein the recipient is a merchant, the owner of the electronic value stored by the selected one of the plurality of parties is a customer of the merchant and the electronic value stored by the selected one of the plurality of parties is stored in a financial account of the owner.
8. A computer-implemented method according to clause 6 or 7, comprising:
   providing, via the interactive user interface, a selectable list of categories for one of the plurality of parties;
   receiving, via the interactive user interface, a selection of one or more of the listed categories to be associated with the one of the plurality of parties; and
   transmitting, to a computing device associated with a payment service provider, an electronic message indicating the selected one or more of the listed categories to be associated with the one of the plurality of parties.
9. A computer-implemented method according to any one of clauses 6 to 8, comprising:
   providing, via the interactive user interface and in response to transmitting the confirmation message, an option to select or deselect association of the category associated with the recipient of the electronic value amount with the one of the plurality of parties from which the transfer of the electronic value amount to the recipient was made;
   receiving, via the interactive user interface, selection or deselection of the option; and
   transmitting, to a computing device associated with a payment service provider, an electronic message indicating the selection or deselection of the option.
10. A computer-implemented method according to any one of clauses 6 to 9, comprising:
   providing, via the interactive user interface, a selectable list of one or more pending transfers of an electronic value amount for one of the plurality of parties;
   receiving, via the interactive user interface, a selection of one of the listed pending transfers; and
   transmitting, in response to confirmation of the selected transfer and to a computing device associated with the one of the plurality of parties, a confirmation message to initiate the selected transfer.
11. A data processing apparatus for selecting one of a plurality of parties storing electronic value from which to transfer an electronic value amount to a recipient, the data processing apparatus comprising circuitry configured to:
   receive an electronic message indicating the electronic value amount and the recipient of the electronic value amount;
   determine a category associated with the recipient of the electronic value amount;
   select, based on the determined category, the one of the plurality of parties storing electronic value from which to transfer the electronic value amount to the recipient, the selected one of the plurality of parties storing electronic value being associated with the determined category; and
   output an electronic message to a computing device associated with the selected one of the plurality of parties storing electronic value instructing the computing device to transmit a request message to a user device operable by an owner of the electronic value stored by the selected one of the plurality of parties, the request message indicating the electronic value amount and the recipient of the electronic value amount, and, in response to receiving a confirmation message from the user device, initiate the transfer of the electronic value amount to the recipient.
12. A data processing apparatus for authorising a transfer of an electronic value amount to a recipient from a selected one of a plurality of parties storing electronic value, the selected one of the plurality of parties storing electronic value being associated with a category associated with the recipient of the electronic value amount, the data processing apparatus comprising circuitry configured to:
   receive, from a computing device associated with the selected one of the plurality of parties storing electronic value, a request message indicating the electronic value amount and the recipient of the electronic value amount;
   receive, via an interactive user interface and from an owner of the electronic value stored by the selected one of the plurality of parties, an input indicating confirmation of the transfer of the electronic value amount to the recipient; and
   in response to receiving the input, transmit, to the computing device associated with the selected one of the plurality of parties, a confirmation message to initiate the transfer of the electronic value amount to the recipient.
13. A program for controlling a computer to perform a method according to any one of clauses 1 to 10.
14. A storage medium storing a program according to clause 13.
15. A system comprising a data processing apparatus according to clause 11 and a data processing apparatus according to clause 12.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A computer-implemented method of selecting one of a plurality of parties storing electronic value from which to transfer an electronic value amount to a recipient, the method comprising:
receiving an electronic message indicating the electronic value amount and the recipient of the electronic value amount;
determining a category associated with the recipient of the electronic value amount;
selecting, based on the determined category, the one of the plurality of parties storing electronic value from which to transfer the electronic value amount to the recipient, the selected one of the plurality of parties storing electronic value being associated with the determined category; and
outputting an electronic message to a computing device associated with the selected one of the plurality of parties storing electronic value instructing the computing device to transmit a request message to a user device operable by an owner of the electronic value stored by the selected one of the plurality of parties, the request message indicating the electronic value amount and the recipient of the electronic value amount, and, in response to receiving a confirmation message from the user device, initiate the transfer of the electronic value amount to the recipient.

2. A computer-implemented method according to claim 1, wherein the received electronic message indicating the electronic value amount and the recipient of the electronic value amount indicates the category associated with the recipient of the electronic value amount.

3. A computer-implemented method according to claim 1, wherein the category associated with the recipient of the electronic value amount is stored in advance in association with a stored identifier of the recipient.

4. A computer-implemented method according to any preceding claim, wherein the recipient is a merchant, the owner of the electronic value stored by the selected one of the plurality of parties is a customer of the merchant and the electronic value stored by the selected one of the plurality of parties is stored in a financial account of the owner.

5. A computer-implemented method according to any preceding claim, wherein the user device is one of a personal computer, tablet computer or smartphone.

6. A computer-implemented method of authorising a transfer of an electronic value amount to a recipient from a selected one of a plurality parties storing electronic value, the selected one of the plurality of parties storing electronic value being associated with a category associated with the recipient of the electronic value amount, the method comprising:
receiving, from a computing device associated with the selected one of the plurality of parties storing electronic value, a request message indicating the electronic value amount and the recipient of the electronic value amount;
receiving, via an interactive user interface and from an owner of the electronic value stored by the selected one of the plurality of parties, an input indicating confirmation of the transfer of the electronic value amount to the recipient; and
in response to receiving the input, transmitting, to the computing device associated with the selected one of the plurality of parties, a confirmation message to initiate the transfer of the electronic value amount to the recipient.

7. A computer-implemented method according to claim 6, wherein the recipient is a merchant, the owner of the electronic value stored by the selected one of the plurality of parties is a customer of the merchant and the electronic value stored by the selected one of the plurality of parties is stored in a financial account of the owner.

8. A computer-implemented method according to claim 6 or 7, comprising:
providing, via the interactive user interface, a selectable list of categories for one of the plurality of parties;
receiving, via the interactive user interface, a selection of one or more of the listed categories to be associated with the one of the plurality of parties; and
transmitting, to a computing device associated with a payment service provider, an electronic message indicating the selected one or more of the listed categories to be associated with the one of the plurality of parties.

9. A computer-implemented method according to any one of claims 6 to 8, comprising:
providing, via the interactive user interface and in response to transmitting the confirmation message, an option to select or deselect association of the category associated with the recipient of the electronic value amount with the one of the plurality of parties from which the transfer of the electronic value amount to the recipient was made;
receiving, via the interactive user interface, selection or deselection of the option; and
transmitting, to a computing device associated with a payment service provider, an electronic message indicating the selection or deselection of the option.

10. A computer-implemented method according to any one of claims 6 to 9, comprising:
providing, via the interactive user interface, a selectable list of one or more pending transfers of an electronic value amount for one of the plurality of parties;
receiving, via the interactive user interface, a selection of one of the listed pending transfers; and
transmitting, in response to confirmation of the selected transfer and to a computing device associated with the one of the plurality of parties, a confirmation message to initiate the selected transfer.

11. A data processing apparatus for selecting one of a plurality of parties storing electronic value from which to transfer an electronic value amount to a recipient, the data processing apparatus comprising circuitry configured to:
receive an electronic message indicating the electronic value amount and the recipient of the electronic value amount;
determine a category associated with the recipient of the electronic value amount;
select, based on the determined category, the one of the plurality of parties storing electronic value from which to transfer the electronic value amount to the recipient, the selected one of the plurality of parties storing electronic value being associated with the determined category; and
output an electronic message to a computing device associated with the selected one of the plurality of parties storing electronic value instructing the computing device to transmit a request message to a user device operable by an owner of the electronic value stored by the selected one of the plurality of parties, the request message indicating the electronic value amount and the recipient of the electronic value amount, and, in response to receiving a confirmation message from the user device, initiate the transfer of the electronic value amount to the recipient.

12. A data processing apparatus for authorising a transfer of an electronic value amount to a recipient from a selected one of a plurality of parties storing electronic value, the selected one of the plurality of parties storing electronic value being associated with a category associated with the recipient of the electronic value amount, the data processing apparatus comprising circuitry configured to:
receive, from a computing device associated with the selected one of the plurality of parties storing electronic value, a request message indicating the electronic value amount and the recipient of the electronic value amount;
receive, via an interactive user interface and from an owner of the electronic value stored by the selected one of the plurality of parties, an input indicating confirmation of the transfer of the electronic value amount to the recipient; and
in response to receiving the input, transmit, to the computing device associated with the selected one of the plurality of parties, a confirmation message to initiate the transfer of the electronic value amount to the recipient.

13. A program for controlling a computer to perform a method according to any one of claims 1 to 10.

14. A storage medium storing a program according to claim 13.

15. A system comprising a data processing apparatus according to claim 11 and a data processing apparatus according to claim 12.
